**Europäisches Patentamt**

**European Patent Office**

**Office européen des brevets**

(19)

(11) Publication number : **0 495 856 B1**

# EUROPEAN PATENT SPECIFICATION

(12)

(45) Date of publication of patent specification :
**22.12.93 Bulletin 93/51**

(51) Int. Cl.⁵ : **C09K 7/02**

(21) Application number : **90915326.4**

(22) Date of filing : **10.10.90**

(86) International application number :
**PCT/GB90/01559**

(87) International publication number :
**WO 91/05832 02.05.91 Gazette 91/10**

(54) **WELLBORE FLUID.**

(30) Priority : **13.10.89 GB 8923082**

(43) Date of publication of application :
**29.07.92 Bulletin 92/31**

(45) Publication of the grant of the patent :
**22.12.93 Bulletin 93/51**

(84) Designated Contracting States :
**AT BE DE DK ES FR GR IT NL SE**

(56) References cited :
**DE-A- 2 359 486**
**DE-A- 2 524 745**
**US-A- 2 713 030**
**US-A- 3 841 419**
**US-A- 4 502 969**

(73) Proprietor : **INTERNATIONAL DRILLING FLUIDS LIMITED**
**190 Vauxhall Bridge Road**
**London SW1V 1DX (GB)**

(72) Inventor : **JONES, Kerry George**
**"Mountview", 63 Rose Hill, St Blazey**
**Par, Cornwall PL24 2LQ (GB)**

(74) Representative : **Nash, David Allan et al**
**Haseltine Lake & Co. 28 Southampton**
**Buildings Chancery Lane**
**London WC2A 1AT (GB)**

EP 0 495 856 B1

## Description

This invention relates to wellbore fluids suitable for use in the well drilling industry, for instance in the drilling of oil, gas and other wells such as geothermal wells. Such fluids may be used not only for drilling, but also for completion, workover and packing of wellbores. In particular, the invention is concerned with a wellbore fluid which has a high concentration of a mono- or oligosaccharide component and to a method of drilling using such a wellbore fluid.

A wellbore is drilled by attaching to the bottom of a length of drill pipe a cutting bit which is rotated either by means of a prime mover on the surface which applies rotary motion to the top end of the drill pipe or by means of a turbine motor fixed to the drill pipe near the lower end, the turbine motor being driven by circulating fluid in the wellbore.

In either case, a drilling or wellbore fluid is required to remove cuttings from around the bit and to transport the cuttings to the surface for separation and removal. The drilling fluid also cools the bit and lubricates both bit and drill pipe thus reducing friction.

The geological formations which must be penetrated during the drilling of wells vary widely in their composition and physical nature, such variations depending principally upon the process by which the formations were laid down. One essential requirement for a drilling fluid is that it should have a minimal reaction with, and the smallest possible effect on the stability of, the formation through which the well passes. In many cases, it is possible to use a drilling fluid of very simple composition, for example, a simple mixture of bentonite and water, where the formation through which the well passes is both chemically inert and of good physical stability over the full depth of the well.

In many geographical areas, however, the earth or rock formations through which it is required to drill wells comprise "reactive" materials which are water sensitive or unstable in the presence of water and which, as a consequence, swell or disintegrate in water with the results that the cuttings tend to break down into smaller particles making them difficult and expensive to separate from recirculated drilling fluid, and that the walls of the hole which is drilled tend to be unstable. Examples of such formations include shales containing clay minerals which may be of the swelling type, for example, smectite clays such as montmorillonite, bentonite and the like, or of the non-swelling type such as kaolinite or illite.

Shales containing smectite clays are especially reactive and difficult to drill but the non-swelling clays may also cause serious problems, especially if they are poorly consolidated in the formation. When it is required to drill a formation containing reactive materials of the above type, an "inhibitive" drilling fluid is conventionally used. This is a drilling fluid which is formulated in such a way that the swelling and disintegration of the formation and cuttings is substantially reduced.

Hitherto, the most commonly adopted solution to the problem described above has been the use of oil based drilling fluids, especially in the form of a water in oil or "invert" emulsion which typically contains 50 to 90% by volume of oil and 10 to 50% by volume of water. Such a drilling fluid has good inhibitive properties but also has two serious disadvantages, namely the high cost of the oil phase and the harmful effects on the environment when the drilling fluid, or cuttings coated with drilling fluid, are disposed of.

In the earliest oil-based drilling fluids, the oil phase was diesel oil, crude oil or gas oil. These are relatively inexpensive but they do tend to contain high proportions of aromatic compounds which are toxic not only to the operators who handle such fluids, but also to the environment, especially to the marine environment when the cuttings generated during drilling with such fluids are dumped directly into the sea. More recently, low aromatic oils, which are often referred to as low toxicity or "clean" oils, have been used in oil based drilling fluids with a resultant substantial elimination of the acute toxicity problems. However, even these low aromatic oils give rise to problems in the marine environment.

Increasing concern about the environment has led to stricter controls on the proportion of oil which can be associated with cuttings discharged to the sea and it is becoming increasingly difficult to justify the use of fluids which generate cuttings which contain significant proportions of oil. It is possible, of course, to treat the cuttings to reduce the proportion of oil before discharge to the sea, or to transport the cuttings for treatment elsewhere; but both these solutions add to the cost of the drilling operation and generate more logistical problems for the operator.

There is, therefore, a requirement in the well drilling industry for a drilling fluid which provides many of the benefits of oil-based fluids whilst avoiding the discharge of oils and toxic materials.

Previously, many inhibitive water-based drilling fluids have been used to minimise the swelling or dispersion of clay-rich sedimentary formations. These include those based on salt solutions (especially potassium salts), often including certain water-soluble polymers to enhance inhibition. For example, GB-1341167 (Shell) teaches the use of partially hydrolysed polyacrylamide solutions for inhibition. More recently US-4780220 teaches the use of drilling fluids containing an aqueous solution of at least 6% by volume of a water-soluble

EP 0 495 856 B1

liquid selected from the group consisting of a polyglycerine and mixtures of polyglycerine with glycerine to provide inhibition of clay formations. Yet more recently, US-4830765 teaches the use for this application in drilling fluids of aqueous solutions of between 5 and 50% by volume of a water-soluble component which is tripropylene glycol bottoms having from between about 5% and about 20% by volume tripropylene glycol and from between about 95% and about 80%, by volume, polypropylene glycol highers.

It is well known that glycerol and glycol form complexes with clays, and it is assumed that the glycerol and polypropylene glycol species mentioned above, especially the higher polymers, minimise clay hydration by preferential adsorption due to hydrogen bonding on to active sites on clays.

GB-2176199 relates to a water-based wellbore fluid in which, as an additive, a mixture of high pyruvate xanthan and locust bean gum is used in order to impart "pseudoplastic" properties to the fluid.

GB-1406513 relates to a drilling fluid additive comprising hydrolyzed cereal solids consisting essentially of polysaccharides, principally hexasaccharides and above. The additive is used as a viscosity reducer in an amount of up to 8 pounds per barrel which is equivalent to about 2-3% by weight of the fluid.

GB-934165 describes a drilling fluid which, when penetrating into the formation, does not form an impermeable layer on the wall of the formation but decreases the permeability of the formation at some distance from the wall. The fluid may include a component to weight the drilling fluid; such weighting components are said to include sugar, glycerine, water-glass or lead acetate.

EP-0171962 relates to high molecular weight gum additives capable of permitting water-swellable montmorillonite clays to seal against permeability in earthen formations when used in drilling fluids, and for water sealing in lagoons and landfalls when contacted by salt water.

EP-0079837 concerns the preparation of aqueous dispersions of high molecular weight gums which may be used, inter alia, in oil exploration.

Surprisingly, it has now been found that a group of economical and readily available natural materials dissolved in substantial quantities in water-based wellbore fluids, will provide very effective shale inhibition.

Thus, according to a first aspect of the present invention there is provided a water-based wellbore fluid being substantially free from any oil component and having a carbohydrate additive which is a water soluble extract of a naturally derived material having a high proportion of monosaccharides and/or oligosaccharides, said carbohydrate additive being employed in an amount sufficient to provide at least 10% by weight of the monosaccharide/oligosaccharide component in the aqueous phase of the fluid.

Preferably, the carbohydrate additive is employed in an amount sufficient to provide at least 16%, and more preferably at least 22%, by weight of the monosaccharide/oligosaccharide component in the aqueous phase of the fluid.

Most advantageous results are achieved when the carbohydrate additive is a concentrated water-soluble extract of sugar cane, sugar beet or malted grain which contains the desired proportion of monosaccharides (e.g. dextrose and fructose) and/or oligosaccharides (e.g. sucrose). Such concentrated extracts contain about 45 - 60% by weight of total sugars. Such extracts have been found to contain additional components which confer advantageous properties on the wellbore fluid. For instance, it has been found that where the carbohydrate additive is one of the water-soluble extracts referred to above, the shale inhibitive properties are improved and are retained at higher temperatures than where the pure mono- or oligosaccharide is used as the additive. It is hypothesised that these improved properties arise because of higher oligomers (containing, for example, no more than 6 monosaccharide units) in the extracts which are adsorbed by the clay surfaces in the well and reduce swelling and disintegration of the surfaces of the well. The water-soluble extract should be used in an amount sufficient to provide the desired proportion of mono- or oligosaccharide component. Thus, at least about 15% by weight of the extract should preferably be employed.

The water-soluble extract of sugar cane or sugar beet is preferably a molasses extract, such as sugar cane molasses, sugar beet molasses or "condensed molasses solids" (CMS) which is a by-product obtained by the concentration by evaporation of solutions remaining after the fermentable sugars contained in molasses have been largely removed by fermentation processes.

The carbohydrate additive may include small amounts of higher saccharides, but these are not significant compared with the quantities of mono-and oligosaccharides present.

The wellbore fluid of the invention is substantially free of any oil components. It is also preferably free from any component which is capable of penetrating the wall of a wellbore during drilling and decreasing the permeability of the formation at a distance from the wall.

The malted grain extract is preferably malted barley, for instance malt extract which is a concentrated aqueous solution of the soluble components of malted barley.

According to a second aspect of the present invention, there is provided a method of drilling a wellbore in which a drilling fluid in accordance with the first aspect of the present invention is employed.

The wellbore fluid the subject of this invention provides a shale-inhibitive fluid of very low toxicity and high

3

biodegradability. It has been found possible to utilise in this fluid, in the normal way and with expected effects, one or more conventional wellbore fluid additives such as:

(i) viscosifying polymers including xanthan gum; "polyanionic cellulose", carboxymethyl cellulose, hydroxyethylcellulose, guar gum and its derivatives;

(ii) filtration reducers such as starch and its derivatives, low viscosity carboxymethyl cellulose, low viscosity polyanionic cellulose, synthetic vinylic polymers or copolymers;

(iii) clays such as smectite clays, for example bentonite. Where bentonite is used, it should be "prehydrated" by mixing with fresh water to allow swelling and dispersion of the clay prior to incorporation in the fluid, because the invention will inhibit the swelling and hydration of bentonite;

(iv) density control agents such as ground barytes, hematite, calcite or dolomite;

(v) inorganic salts such as sodium chloride, potassium chloride, calcium chloride, calcium sulphate and pH control agents such as sodium, potassium or calcium hydroxides;

(vi) bactericides or fungicides to inhibit fermentation of the fluid;

(vii) defoamers and agents to improve lubricity.

The wellbore fluid of the present invention may, therefore, have a solid phase as a result of the presence of one of the solid components mentioned above (e.g. density control agents or clays).

The wellbore fluid of the present invention will almost invariably include a "filtration reducer" (i.e. component (ii) above) sometimes also known as a fluid loss control agent. This component functions to reduce the amount of aqueous phase lost to the formation by forming (or participating in the formation of) an impermeable layer on the wall of the formation of the wellbore.

Filtration reducers are generally polymeric species of medium to high molecular weight which disperse in water to a colloidal dispersion or solution. They normally include functional chemical groups which cause them to adsorb strongly onto mineral surfaces. Because of their molecular dimensions or colloidal dimensions when dispersed in the fluid, and because of their tendency to adsorb, they concentrate on the surface of a porous mineral such as shale to provide a dense layer or compact mass "filter cake" which is substantially impermeable to further filtration of the aqueous phase.

Dispersed solids, especially those with a broad particle size range, assist in this "cake making" or plastering process, but are not essential.

Filtration reducers may be employed in the wellbore fluids of the present invention in an amount sufficient to reduce substantially the amount of aqueous phase of the wellbore fluid lost to the formation, i.e. in an amount sufficient to form an unpermeable layer (on its own or in combination with another component) on the wall of the formation of the wellbore. Normally, this will amount to at least 0.7 pounds per barrel of the fluid (2 kg.m$^{-3}$ or about 0.2% w/v) and no more than about 14 ppb (40 kg.m$^{-3}$ or about 4% w/v).

In passing, it should be pointed out that wellbore fluids of the present invention to some extent possess the ability to build an unpermeable layer on the formation even without a filtration reducer (see Example 7, Fluid No. (xii) below).

Wellbore fluids formulated according to the invention have been found to possess the following advantages compared to otherwise identically formulated fluids utilising a conventional source of aqueous medium such as sea water or fresh water:

(a) highly effective inhibition of shale hydration;

(b) much lower filtration rates (i.e. reduce fluid loss);

(c) lower corrosion rates;

(d) reduced increase in viscous properties when the fluid becomes contaminated with large quantities of drilled solids, such contamination being common during a well-drilling process;

(e) reduction in freezing point (for application in cold climates); by analogy with "antifreeze" agents such as glycol, it is also anticipated that the formation of "gas hydrates" (solid ice-like complexes of, for example, methane and water) will be inhibited;

(f) a reduction in the solubility of salt; should natural salt-beds be intersected during the drilling process wellbore fluid taught herein would therefore be expected to cause less bore hole enlargement due to salt dissolution.

Wellbore fluids of the present invention also tend to be more tolerant to contamination by drilled solids and have good inhibitive properties without containing high concentrations of salts. They can therefore be disposed of on land without causing contamination.

By comparison with some other prior-art wellbore fluids which afford shale inhibition, such as oil-based drilling fluids, or fluids containing high concentrations of salts such as sodium and potassium chloride, the invention can provide inhibitive and effective wellbore fluids which minimise damage to the environment due to the disposal of the fluid or contaminated cuttings. For example:

i) effective and inhibitive fluids can be formulated which are totally oil-free;

4

ii) effective and inhibitive fluids can be formulated using a fresh water solution of the preferred products as the aqueous medium; this avoids the use of high levels of chloride salts or other high ionic salt concentrations in the fluid; this reduces the probability of damage to land or freshwater environment flora and fauna, such as the chlorosis of plant life and the possibility of polluting aquifers;

iii) fluids formulated according to the invention are of inherently very low toxicity to mammals and sea water or fresh water organisms;

iv) the preferred products are readily biodegradable and assimilable in the natural food chains, providing very low long term damaging effects to the environment.

The invention will now be illustrated by the following examples. In these examples, the drilling fluid properties were tested in accordance with API Recommended Practice 13 B, unless otherwise stated.

EXAMPLE 1

Tests were performed in order to show the shale inhibitive properties of the present invention. Simple drilling fluids were prepared using 350ml of aqueous phase per sample. Each sample was viscosified with 0.7g of xanthan gum and the filtration (Fluid Loss) properties were controlled in each sample by the addition of 3.0g of IDFLO HTR, a proprietary modified starch product. The pH of each sample was adjusted to pH 9.0 using either caustic soda or citric acid as required.

The aqueous phase of the samples was composed as follows:

i) Sea water alone.

ii) A mixture of sea water and sugar cane molasses (for typical analysis see Example 4) containing 105 lbs of molasses solids per barrel of mixture (105ppb equivalent to 300kg.m$^{-3}$).

iii) A mixture of sea water and sugar beet molasses containing 105ppb (300 kg.m$^{-3}$) molasses solids.

iv) A mixture of sea water and "Condensed Molasses Solubles" (CMS) containing 105 ppb (300 kg.m$^{-3}$) CMS solids. The CMS was produced from sugar cane molasses.

v) A mixture of sea water and malt extract containing 105 ppb (300 kg.m$^{-3}$) malt extract solids.

vi) Sea water/sucrose solution containing 105ppb (300 kg.m$^{-3}$) sucrose.

vii) Sea water/dextrose solution containing 105ppb (300 kg.m$^{-3}$) dextrose.

viii) Sea water/fructose solution containing 105ppb (300 kg.m$^{-3}$) fructose.

ix) For comparison, sea water/HF100 solution containing 105ppb (300 kg.m$^{-3}$) HF100. (HF100 is a tradename of Hydra-Fluids Inc. for a mixture of polyglycerines and glycerine as taught in US-4780220).

x) Again for comparison, sea water solution containing 20ppb (57 kg.m$^{-3}$) KCl + 0.5ppb (1.43 kg.m$^{-3}$) IDBOND partially hydrolysed polyacrylamide as taught in GB-1341167.

Note; ppb stands for pounds per barrel.

To test the shale inhibitive properties, synthetic "shale" pellets were prepared by compressing at 10 tons/sq. inch (154 MPa) a mixture of 75% $^w$/w Wyoming bentonite and 25% $^w$/w large particle kaolin clay so that a short cylinder of hard "synthetic shale" was produced. These pellets, when placed in a drilling fluid sample in a closed pressure bomb, form a good test material for shale inhibition in that they swell, soften, or disintegrate (if the fluid is of low inhibitive power) after the pellet is exposed to the fluid for 16 hours at 200°F (93.3°C) by rotating the bomb in a "Hot Rolling Oven".

After the hot rolling test, the pellet is removed where possible, its visual appearance assessed, and intact pellets are tested for hardness using an "ELF Penetrometer" which measures the force required to indent a point into the pellet surface.

The results (Table 1) show that the cane molasses in particular displayed very high levels of inhibition compared to the prior art inhibitive drilling fluids based on either KCl / IDBOND or on HF100 polyglycerines. Malt extract also shows a useful inhibitive effect. Molasses from sugar beet, although inferior to cane molasses, also performed well. The condensed Molasses solubles fluid also performed very well.

TABLE 1

| Fluid No. | Test Substance | Pellet Appearance After Hot Rolling | Hardness g/mm |
|---|---|---|---|
| (i) | None | Disintegrated | -- |
| (ii) | Cane Molasses | Intact/Hard | 295 |
| (iii) | Beet Molasses | Intact, Slight Cracking | 155 |
| (iv) | Condensed molasses solubles | Intact/Hard | 245 |
| (v) | Malt Extract | Some Dispersion/ Cracking | 160 |
| (vi) | Sucrose | Disintegrated | -- |
| (vii) | Dextrose | Disintegrated | -- |
| (viii) | Fructose | Disintegrated | -- |
| (ix) | HF100 Polyglycerines | Swollen/Sticky | 95 |
| (x) | KCl + IDBOND | Swollen/Cracked | 90 |

The results for (ii), (iii), (iv) and (v) are surprising by comparison with the negligible inhibitive effect exerted by sucrose, dextrose, or fructose.

The potassium concentration of fluid (x) was at least three times greater than that in fluids (ii), (iii), (iv), and (v), but fluid (x) still provided far inferior inhibition. This shows that the inhibition provided by the invention is not a direct result of the potassium naturally occurring in, for example, molasses.

Further tests on sucrose, dextrose and fructose are described in Example 2 below.

EXAMPLE 2

Four simple drilling fluids were prepared as described in Example 1 using 350 ml of aqueous phase per sample.

The aqueous phase of the samples was composed as follows:

(i) Sea water alone
(ii) Sea water/sucrose solution containing 105 ppb (300 kg.m$^{-3}$) sucrose
(iii) Sea water/dextrose solution containing 105 ppb (300 kg.m$^{-3}$) dextrose
(iv) Sea water/fructose solution containing 105 ppb (300 kg.m$^{-3}$) fructose

Each drilling fluid was tested for shale inhibitive properties by the procedure described in Example I, except that the temperature of the fluid in the hot rolling operation was 140°F (60°C), rather than the higher temperature of 200°F (93.3°C) used in Example 1, and the duration of the hot rolling operation was 10 hours rather than 16 hours.

The results are shown in Table 2 below:-

## Table 2

| Fluid No. | Test Substance | Pellet Appearance After Hot Rolling | Hardness g/mm |
|-----------|----------------|-------------------------------------|---------------|
| (i) | None | Swollen, broken | 150 |
| (ii) | Sucrose | Intact, slight swelling | 280 |
| (iii) | Dextrose | Intact, slight swelling | 240 |
| (iv) | Fructose | Intact, harder | 800 |

Although the simple sugars seemed ineffective at 200°F (93.3°C) in Example 1, these results show that, at lower temperatures such as 140°F (60°C), beneficial effects on clay inhibition are obtained by their use, with especial benefit being obtained from fructose.

The generally greater pellet hardnesses obtained in this test sequence, as compared with those obtained in Example 1, simply reflect the milder hot rolling conditions.

EXAMPLE 3

These tests were performed with the same polymer additions and in a similar manner to Example 1 except that the dose of inhibitive agent in the aqueous phase was varied as follows:

| | Sea Water (% by vol.) | Cane Molasses (% by vol.) | HF 100 (% by vol) |
|-------|-----------------------|---------------------------|--------------------|
| i) | 90 | 10 | -- |
| ii) | 80 | 20 | -- |
| iii) | 70 | 30 | -- |
| iv) | 60 | 40 | -- |
| v) | 50 | 50 | -- |
| vi) | 90 | -- | 10 |
| v) | 80 | -- | 20 |
| vi) | 70 | -- | 30 |

The results obtained after hot rolling of the shale pellet inhibition trials as described in Example 1 are shown in Table 3.

## TABLE 3

| Fluid No. | Pellet Appearance After Hot Rolling | Hardness g/mm |
|---|---|---|
| i) | broken-up into hard lumps | -- |
| ii) | broken-up into hard lumps | -- |
| iii) | some Degradation, no swelling | 90 |
| iv) | intact, hard, no swelling | 240 |
| v) | intact, hard, no swelling | 365 |
| vi) | one piece, very swollen | 40 |
| vii) | one piece, swollen | 65 |
| viii) | intact, slight swelling | 145 |

These results show that cane molasses is a very inhibitive additive, especially when used at high doses (approximately 30% and above). It reduces swelling compared with HF100 product, but allows some pellet break-up when used at lower doses.

Whilst being comparable to the HF100 polyglycerine system in its effects, the molasses has an advantage in being much cheaper, and readily available in large quantities world-wide.

Besides the above, the molasses confers an extra advantage in that exceptionally good filtration properties are provided by its addition.

Using the same formulations (i) to (viii) as detailed above, the rheological and filtration properties (as per API R.P. 13 B) where measured using a Fann Model 35C viscometer (used in all Examples herein) and the results are shown in Table 4 below. In the Fann viscometer, the wellbore fluid is contained in the annular space between two coaxial vertical cylinders, the outer of the two cylinders being rotatable at a constant velocity. The viscous drag of the fluid produces a torque on the inner cylinder, rotation of which is restrained by a torsion spring. A pointer connected to the inner cylinder records the displacement of this cylinder from a zero position and thus gives a measure of the viscosity of the fluid.

The apparent viscosity (AV) is given by the scale reading divided by 2 for a rotational speed of the outer cylinder of 600 rpm.

The plastic viscosity (PV) is given by the scale reading for a rotational speed of 600 rpm minus the scale reading for a rotational speed of 300 rpm.

The yield point (YP) is given by the scale reading for a rotational speed of 300 rpm minus the plastic viscosity.

The 10 second gel strength (GELS) is obtained by stirring the fluid at a high rotational speed for 10 seconds, allowing the fluid to stand undisturbed for a further 10 seconds and finally observing the scale reading for a rotational speed of 3 rpm.

The yield point or the 10 second gel strength in $kg.m^{-2}$ may be obtained by multiplying the result in lb/100 $ft^2$ by 0.05.

API fluid loss is measured by the method set out in API RP 13 B. A sample of the wellbore fluid is placed in a cylinder of diameter 76mm and height 64mm. In the bottom of the cylinder is a sheet of filter paper supported on a perforated plate below which is a drain tube. The top of the cylinder is sealed and the pressure above the sample is increased to 100 psig (689KPa) by means of compressed air. A graduated cylinder is placed beneath the drain tube and the volume of filtrate collected in a time of 30 minutes, starting from the commencement of the application of pressure, is recorded as the fluid loss in millilitres.

## TABLE 4

| Fluid No. | % Additive | Apparent Viscosity CP | Plastic Viscosity CP | Yield Point lb/100ft$^2$ | API Fluid Loss (mls) |
|---|---|---|---|---|---|
| i) | 10 Molasses | 15.5 | 8 | 15 | 8.9 |
| ii) | 20 Molasses | 15 | 8 | 14 | 10.4 |
| iii) | 30 Molasses | 21 | 14 | 14 | 6.8 |
| iv) | 40 Molasses | 31 | 21.5 | 19 | 1.6 |
| v) | 50 Molasses | 44 | 30 | 28 | 0.5 |
| vi) | 10 HF 100 | 15.5 | 8 | 15 | 17.0 |
| vii) | 20 HF 100 | 17 | 10 | 14 | 14.0 |
| viii) | 30 HF 100 | 18 | 10 | 16 | 11.2 |

Besides providing very acceptable rheological properties, even at a 50% level, molasses confers an improvement in filtration properties, the filtrate volume being reduced in all cases.

## EXAMPLE 4

### COMPOSITION OF CANE MOLASSES

Cane molasses is a by-product of agriculture and its composition is affected by the variety and maturity of the cane as well as climatic and soil conditions. In addition, processing conditions in the sugar factory may affect the composition of molasses. For this reason it is not possible to establish a typical analysis of molasses, but a broad range of composition may be given as shown in Table 5 below:

## TABLE 5

| Dry Matter | | approx. 75% |
|---|---|---|
| Total sugars | | 48-56% |
| of which: | | |
| Sucrose | 30-40% | |
| Reducing Sugars | 15-20% | |
| Unfermentable Sugars | 2.0-4.0% | |
| Non-Sugars organic matter | | 9-12% |
| of which: | | |
| soluble gums and other carbohydrates | approx. 4.0% | |
| Organic acids such as aconitic acids | approx. 3.0% | |
| Small amounts of citric acid, malic acid, succinic acid, etc. | | |
| Small amounts of waxes, sterols, pigments and vitamins | | |
| Nitrogen components as protein (i.e. Nx6.25) | 2-3% | |
| Sulphated Ash | | 10-15% |
| of which: | | |
| Sodium (as Na) | 0.1-0.4% | |
| Potassium (as K) | 1.5-5.0% | |
| Calcium (as Ca) | 0.4-0.8% | |
| Chlorine (as Cl) | 0.7-3.0% | |
| Phosphorous (as P) | 0.6-2.0% | |

Reducing sugars are those sugars which reduce Fehling's solution.

It will be calculated, therefore, that sugar cane molasses solids contain 40 - 53% by weight of oligosaccharides (sucrose) and 23 - 32% by weight of monosaccharides. (Reducing sugars and "unfermentable" sugars are generally regarded as monosaccharides).

EXAMPLE 5

COMPOSITION OF BEET MOLASSES

The same comments on the composition of beet molasses apply as in cane molasses in that being an agricultural by-product its composition is affected by climatic and soil conditions and plant variety and maturity. As will be seen in Table 6, the composition of the non-sugar organic matter is very different to cane molasses in that there is a high percentage of nitrogen compounds. The notable difference of cane molasses in terms of sugar content is the low percentage of reducing sugars.

TABLE 6

| | | |
|---|---|---|
| Dry matter | | 74-78% |
| Sucrose | | 48-52% |
| Reducing Sugars | 0.2-1.2% | |
| Raffinose | 0.5-2.0% | |
| | | |
| Organic non-sugar matter | | 12-17% |
| of which 6-8% are nitrogen compounds | | |
| including 3-4% Betaine and | | |
| 2-3% Glutamic Acid and Precursors | | |

A further 6-8% Non Nitrogen bodies, i.e. organic acids, Lactic Acid, Malic Acid, Acetic Acids and Oxalic Acids.

| | | |
|---|---|---|
| Sulphated Ash | | 10-12% |
| of which: | | |
| Sodium (as Na) | 0.3-0.7% | |
| Potassium (as K) | 2.0-7.0% | |
| Calcium (as Ca) | 0.1-0.5% | |
| Chlorine (as Cl) | 0.5-1.5% | |
| Phosphorus (as P) | 0.02-0.07% | |

It will be calculated, therefore, that sugar beet molasses solids contains about 68 - 71% by weight of oligosaccharides (sucrose and raffinose) and about 0.3 - 6.1% by weight of monosaccharides

EXAMPLE 6

Test were performed to show the effects of increasing clay contaminant concentrations (which naturally occurs when drilling shale sedimentary rocks) on the viscous properties of a fluid containing cane molasses, compared to the effects on a similar fluid which contained no cane molasses.
Base Fluid Compositions per 350 mls.

| Component | Fluid A | Fluid B |
|---|---|---|
| Sea water ml | 175 | 350 |
| Cane Molasses ml | 175 | -- |
| Xanthan Gum g | 0.7 | 0.85 |
| IDFLO HTR g | 3.0 | 3.0 |
| Caustic Soda | to pH 9.0 | to pH 9.0 |

The fluids were formulated with different doses of xanthan gum so that they exhibited similar Yield Point values at first.

To simulate drilled clay solids, increasing doses of a mixture of 75% powdered ball clay and 25% Wyoming bentonite were added to each fluid, the rheological properties then being measured using the Fann viscometer (see Example 3) at each stage after thoroughly mixing in the clay contaminant.

The results obtained are shown in Table 7.

## TABLE 7

| Fluid | Dose of Clay Contaminant (ppb) | Apparent Viscosity CP | Plastic Viscosity CP | Yield Point lb/100ft$^2$ | 10 second gel strength lb/100ft$^2$ |
|---|---|---|---|---|---|
| (A) | 0 | 21 | 12 | 18 | 6 |
| Sea water | 20 | 26 | 12 | 28 | 12 |
| Base | 40 | 47 | 19 | 56 | 33 |
| | 60 | 55 | 20 | 70 | 49 |
| | 80 | 73 | 24 | 98 | 79 |
| (B) | 0 | 31 | 22 | 18 | 6 |
| Molasses | 20 | 40 | 26 | 28 | 7 |
| Treated | 40 | 48 | 32 | 32 | 10 |
| | 60 | 57 | 39 | 36 | 14 |
| | 80 | 76 | 50 | 52 | 22 |

The results show that the molasses treated fluid tolerated drilled solids contamination much better than the sea water base fluid. In particular, the very high gel strengths exhibited by the untreated fluid are avoided.

A synthetic shale pellet was hot rolled for 16 hours at 200°F (93.3°C) in a sample of fluid B dosed with 20ppb (57 kg.m$^{-3}$) clay. The shale pellet after rolling was completely intact, hard, and unswollen.

The properties of this fluid after hot rolling as measured by the Fann viscometer (see Example 3) were as follows:

| AV CP | PV CP | YP lb/100ft$^2$ | 10 second gel strength lb/100ft$^2$ | API Fluid loss ml. |
|---|---|---|---|---|
| 38 | 26 | 24 | 6 | 3.0 |

Contamination with clays did not affect the inhibitive properties of the fluid, and the properties of the fluid remained little changed after hot rolling.

EXAMPLE 7

These tests were performed in order to verify the performance of conventional polymeric drilling fluid additives in an aqueous phase consisting of sea water mixed with cane molasses.

Base Fluid composition
Sea water                              210 mls
Cane Molasses                          140 mls
Fine particle clay (OCMA CLAY)         35 g
Caustic Soda                           2g
Defoamer                               0.2 g

To samples of this basic formulation was added 2g of the following viscosifying polymers.

i) Xanthan Gum (Rhodapol 23P (TM Rhone Poulenc))
ii) High viscosity Polyanionic Cellulose (IDF-FLR TM IDF)
iii) XANVIS Bacterial Gum (XANVIS T.M. Merck)
iv) High Viscosity sodium carboxymethylcellulose (CMC-HV)
v) Guar Gum
vi) Hydroxyethyl Cellulose

Similarly, the following Fluid Loss Reducing Polymers were added at a dose of 3g to samples of the base fluid.

vii) Drilling Starch
viii) Modified Starch (IDFLO HTR (TM IDF))
ix) Low viscosity sodium carboxymethylcellulose (CMC-LV)
x) Low viscosity polyanionic cellulose (IDF-FLRXL (T.M. IDF))
xi) Synthetic Vinylic copolymer (POLYTEMP - (TM IDF))

In all cases the polymers readily dissolved with moderate mixing. The rheological and filtration properties of the fluids were then tested using the Fann viscometer (see Example 3). The results obtained are shown in Table 8 compared to the base fluid properties - no additive (Fluid No. xii).

## TABLE 8

| Fluid No. | AV (CP) | PV (CP) | YP (lb/100ft$^2$) | Gel Strengths 10s/10min (lb/100ft$^2$) | API Fluid Loss mls. |
|---|---|---|---|---|---|
| i) | 49 | 24 | 50 | 18/28 | --- |
| ii) | 45 | 25 | 40 | 20/37 | --- |
| iii) | 64 | 40 | 48 | 8/17 | --- |
| iv) | 37 | 23 | 28 | 2/2 | --- |
| v) | 40 | 26 | 28 | 6/17 | --- |
| vi) | 67 | 42 | 50 | 9/12 | --- |
| vii) | 16.5 | 13 | 7 | 2/- | 2.6 |
| viii) | 18 | 14 | 8 | 2/- | 2.2 |
| ix) | 16 | 15 | 2 | 1/- | 2.0 |
| x) | 16 | 13 | 6 | 2/- | 1.8 |
| xi) | 22.5 | 20 | 5 | 1/- | 2.2 |
| xii) | 13 | 12 | 2 | 1/1 | 9.8 |

The results show that all the polymers behaved well. No incompatibility was found. The fluid loss of the base formulation with no polymer additive was surprisingly low at 9.8 mls, showing the beneficial effect of cane molasses on this property. (A similar fluid mixed with sea water and no molasses displayed a fluid loss of over 100ml).

## EXAMPLE 8

This experiment shows that Wyoming bentonite can be used in the invention. The bentonite does not hydrate and yield viscosity in molasses mixtures due to the inhibitive effect of molasses. However, high viscosities can be obtained by prehydrating the Bentonite in fresh water, for example as follows:

Fluid composition and mixing order

| | |
|---|---|
| Fresh water | 112 ml |
| Wyoming Bentonite | 10 g |
| Caustic Soda | to pH 10.0 |

This mixture was stirred for two hours to hydrate the bentonite. Then there was added:

| | |
|---|---|
| Sea water | 58 ml |
| Cane Molasses | 175 ml |
| Caustic Soda | to pH 8.5 |

A shale pellet was hot rolled in the fluid for 16 hours at 200°F (93.3°C). After hot rolling, the pellet was intact and hard. The ELF Penetrometer Hardness was 270g/mm.

The fluid properties before hot rolling (BHR) and after hot rolling (AFR) as measured by the Fann viscometer (see Example 3) were as follows:

| | AV (CP) | PV (CP) | YP (lb/100ft$^2$) | GELS (lb/100ft$^2$) | API FL mls. |
|---|---|---|---|---|---|
| BHR | 66 | 27 | 78 | 48/– | 4.5 |
| AHR | 74 | 52 | 44 | 13/28 | 4.8 |

Although the rheological properties were somewhat higher than normally utilised, the results show that an effective fluid can be formulated using Wyoming bentonite as a viscosifier, whilst still exhibiting high shale inhibitive properties.

## EXAMPLE 9

This test illustrates that a shale inhibitive drilling fluid can be mixed using fresh water and cane molasses. This provides a fluid with low dissolved inorganic salts (particularly chloride) levels, which is suitable for use where such salts could damage plant life by, for example, chlorosis. Such salts as are present originate from those naturally occurring in molasses.

Fluid Formulation

| | |
|---|---|
| Fresh Water | 175 ml |
| Cane Molasses | 175 ml |
| IDFLO HTR (Modified Starch) | 3 g |
| Xanthan Gum (Polysaccharide) | 0.7 g |
| Caustic Soda | to pH 9.0 |

A shale pellet was hot rolled as before in the fluid for 16 hours at 200°F.

The fluid properties before and after hot rolling as measured by the Fann viscometer (see Example 3) were as follows:

| | AV (CP) | PV (CP) | YP (lb/100ft$^2$) | GELS (lb/100ft$^2$) | API FL mls. |
|---|---|---|---|---|---|
| BHR | 20 | 15 | 10 | 3/6 | 1.4 |
| AHR | 20 | 14 | 12 | 4/7 | 2.0 |

The shale pellet after hot rolling was intact, hard and unswollen. The hardness measured by the ELF Penetrometer was 290g/mm.

The results show that a very inhibitive drilling fluid of good physical properties can be formulated from substantially entirely biodegradable products and fresh water, whilst containing low levels of dissolved salts.

## EXAMPLE 10

An experiment was performed to show the solubility of common salt in a mixture of cane molasses and fresh water.

Sodium chloride was added incrementally over a long period to 350 mls. of a mixture of 60% water and 40% molasses (by volume) until no more salt dissolved. The mixture was held at 20°C.

The result below is expressed in terms of grammes NaCl/350mls of final solution (equivalent to pounds per barrel (ppb)).

Result - final sodium chloride concentration = 33.7 ppb (96.3 kg.m$^{-3}$).

This compares to the result for sodium chloride solubility in fresh water which is 110 lbs NaCl per barrel of solution (110 ppb = 314 kg.m$^{-3}$).

This shows that the drilling fluids of this invention will be of value when drilling massive subterranean salt formations, in that hole enlargement due to borehole wall dissolution will be reduced, or much less salt is required to pre-saturate the fluid to inhibit further salt dissolution.

## EXAMPLE 11

Tests were performed to illustrate the reduction in the corrosion rate of steel provided by fluids formulated according to the invention.

Two drilling fluids were tested for their corrosivity:
Fluid Compositions per 350 mls

| Component | Fluid A | Fluid B |
|---|---|---|
| Sea Water (ml) | 350 | 210 |
| Cane Molasses (ml) | – | 140 |
| Xanthan Gum (g) | 0.7 | 0.7 |
| IDFLO HTR (g) | 3.0 | 3.0 |

Fluid B had a natural pH of 5.2. Fluid A was also adjusted to pH 5.2 using dilute hydrochloric acid prior to testing. The low pH for both fluids was chosen to accentuate the corrosion effects and to replicate more closely aggressive conditions encountered in field applications.

To test the corrosivity, a sample of the fluid was placed in a "Berghof" stirred autoclave. A preweighted steel coupon was attached to the stirrer rotor which was inserted into the fluid. The autoclave was sealed and connected to a compressed air cylinder to maintain the pressure at 50 bars, allowing supply of air for corrosion. The autoclave was heated and maintained at 100°C. The stirrer + coupon was continuously rotated at maximum speed. The test was run for five days after which the coupon was removed, cleaned to remove corrosion products, and the corrosion rate determined by weight loss.

The results are shown in Table 9.

### Table 9

| Fluid | Coupon Appearance after Test | Corrosion mil per year |
|---|---|---|
| A (Sea Water based) | Heavily corroded and pitted | 492 |
| B (Molasses based) | Light general corrosion, little pitting | 90 |

EP 0 495 856 B1

The results show a very advantageous reduction in the corrosion rate provided by the invention.

EXAMPLE 12

This test was performed to illustrate the reduction in freezing point provided by the invention.

Identical fluid formulations to (A) and (B) as detailed in Example 11 were tested for their melting point by freezing followed by slow warming. Although the Melting Points were somewhat indistinct, results obtained are shown in Table 10.

Table 10

| Fluid | Melting Point (approx.) |
|---|---|
| (A) Sea water base | $-3°C$ |
| (B) Molasses treated | $-17.5°C$ |

The results show that the invention provides a useful drilling fluid for use in very cold climatic conditions.

EXAMPLE 13

Experiments were performed to illustrate the low toxicity and rapid biodegradability of sugar cane molasses.

Groups of 20 adult Crangon Crangon (brown shrimps) were exposed to six different concentrations of sugar cane molasses between 1000 and 10,000 mg/l in sea water. The test mixtures were maintained between 14.0 and 16.0°C and were aerated to maintain the concentration of dissolved oxygen. A control population in sea water with no molasses was also prepared.

The test dispersions and control were renewed daily for four days and the survival of the shrimp monitored. The $LC_{50}$ values were then calculated. The result is given in Table 11.

The biological oxygen demand (BOD) was determined over a five day period in both fresh water and sea water by methods specified by the British Health & Safety Executive and by the British Ministry of Agriculture. Fisheries and Food, respectively. In each case the ratio of Biological oxygen demand to chemical oxygen demand (COD) was also calculated. The results are given in Table 11.

## Table 11: Toxicity and Biodegradability
### of Sugar Cane Molasses

| $LC_{50}$ | 96 hours Crangon Crangon | : 6600 mg/l |
|---|---|---|
| BOD | (5 day sea water) | : 539 mg $O_2$/g sample |
| BOD | (5 day fresh water) | : 480 mg $O_2$/g sample |
| COD | | : 706 mg $O_2$/g sample |
| BOD | COD ratios | |
| | Sea water | : 0.763 : 1 |
| | Fresh water | : 0.680 : 1 |

These results show that sugar cane molasses has low toxicity to brown shrimps and is very unlikely to pose any toxicity hazard to marine life. Further, they show that sugar cane molasses is readily biodegradable and is unlikely to persist in the environment.

## Claims

1. An aqueous inhibitive wellbore fluid being substantially free from any oil component and having a water-soluble carbohydrate additive which is a water soluble extract of a naturally derived material having a high proportion of monosaccharides and/or oligosaccharides, said carbohydrate additive being employed in an

16

amount sufficient to provide at least 10% by weight of the monosaccharide/oligosaccharide component in the aqueous phase of the fluid.

2. A water-based wellbore fluid according to claim 1, wherein the water-soluble carbohydrate additive is chosen from:
   (a) a water-soluble extract of sugar cane;
   (b) a water-soluble extract of sugar beet;
   (c) a water-soluble extract of malted grain; and
   (d) a mixture of two or more of the above.

3. A water-based wellbore fluid according to claim 2, wherein the water soluble extract is a molasses extract of sugar cane or sugar beet or a malt extract.

4. A water-based wellbore fluid according to claim 2, wherein the water-soluble carbohydrate additive is chosen from sugar cane molasses, sugar beet molasses, condensed molasses solubles or a mixture of two or more thereof.

5. A wellbore fluid according to any preceding claim, wherein the carbohydrate additive is employed in an amount sufficient to provide at least 16% by weight of the monosaccharide/oligosaccharide component in the aqueous phase of the fluid.

6. A wellbore fluid according to any preceding claim, wherein the carbohydrate additive is employed in an amount sufficient to provide at least 22% by weight of the monosaccharide/oligosaccharide component in the aqueous phase of the fluid.

7. A wellbore fluid according to any preceding claim, further including a filtration reducer.

8. A wellbore fluid according to claim 7, wherein the filtration reducer is used in an amount sufficient to reduce substantially the amount of aqueous phase of the wellbore fluid lost to the formation during use.

9. A wellbore fluid according to claim 7 or 8, wherein the filtration reducer is used in an amount of at least 0.2% by weight/volume.

10. A method of drilling a wellbore in which a wellbore fluid according to any one of the preceding claims is employed.

11. The use of a water soluble extract of a naturally derived material having a high proportion of monosaccharides and/or oligosaccharides, as an additive for an aqueous wellbore fluid, substantially free from any oil component, to improve the shale inhibition properties of the fluid.


**Patentansprüche**

1. Wäßrige inhibierende Bohrlochflüssigkeit, die im wesentlichen frei von jeder Öl-Komponente ist und ein wasserlösliches Kohlehydrat-Additiv aufweist, das aus einem wasserlöslichen Extrakt eines natürlichen Materials mit hohem Anteil an Mono- und/oder Oligosacchariden besteht, wobei das Kohlehydrat-Additiv in einer Menge eingesetzt ist, daß mindestens 10 Gew.% Mono-/Oligosaccharid-Komponente in der wäßrigen Phase der Flüssigkeit vorliegt.

2. Wasserhaltige Bohrlochflüssigkeit nach Anspruch 1, worin das wasserlösliche Kohlehydrat-Additiv ausgewählt ist aus (a) einem wasserlöslichen Zuckerrohr-Extrakt, (b) einem wasserlöslichen Zuckerrüben-Extrakt, (c) einem wasserlöslichen Extrakt aus gemälztem Getreide, (d) einer Mischung von zwei oder mehreren der obigen Extrakte.

3. Wasserhaltige Bohrlochflüssigkeit nach Anspruch 2, worin der wasserlösliche Extrakt ein Melasse-Extrakt aus Zuckerrohr oder Zuckerrübe ist oder ein Malzextrakt.

4. Wasserhaltige Bohrlochflüssigkeit nach Anspruch 2, wobei das wasserlösliche Kohlehydrat-Additiv ausgewählt ist aus: Zuckerrohrmelasse, Zuckerrübenmelasse, löslichen Bestandteilen kondensierter Melasse und einer Mischung von zwei oder mehreren der vorstehenden Additive.

**5.** Bohrlochflüssigkeit nach irgendeinem vorhergehenden Anspruch, wobei das Kohlehydrat-Additiv in einer Menge eingesetzt wird, daß mindestens 16 Gew.% Mono-/Oligosaccharid-Komponente in der wäßrigen Phase der Flüssigkeit vorliegt.

**6.** Bohrlochflüssigkeit nach irgendeinem vorhergehenden Anspruch, wobei das Kohlehydrat-Additiv in einer Menge eingesetzt wird, daß mindestens 22 Gew.% Mono-/Oligosaccharid-Komponente in der wäßrigen Phase der Flüssigkeit vorliegt.

**7.** Bohrlochflüssigkeit nach irgendeinem vorhergehenden Anspruch, das zusätzlich einen Filtrationsverminderer enthält.

**8.** Bohrlochflüssigkeit nach Anspruch 7, wobei der Filtrationsverminderer in einer Menge eingesetzt wird, daß der Anteil der wäßrigen Phase in der Bohrlochflüssigkeit, der bei Betrieb in der Formation verloren geht, wesentlich vermindert ist.

**9.** Bohrlochflüssigkeit nach Anspruch 7 oder 8, wobei der Filtrationsverminderer in einer Menge von mindestens 0,2 Gewichtsvolumen-% eingesetzt wird.

**10.** Verfahren zum Niederbringen einer Bohrung, bei dem eine Bohrlochflüssigkeit gemäß irgendeinem der vorhergehenden Ansprüche eingesetzt wird.

**11.** Verwendung eines wasserlöslichen Extrakts eines natürlichen Materials mit hohem Anteil an Mono- und/oder Oligosacchariden als Additiv für eine wäßrige Bohrlochflüssigkeit, die im wesentlichen frei von jeder Öl-Komponente ist, um die Schiefer-inhibierenden Eigenschaften der Flüssigkeit zu verbessern.

## Revendications

**1.** Liquide de forage aqueux inhibiteur, pratiquement dépourvu de tout composant huileux, et contenant un additif hydrate de carbone hydrosoluble qui est un extrait hydrosoluble d'une substance naturelle comprenant une proportion élevée de monosaccharides et/ou d'oligosaccharides, ledit additif hydrate de carbone étant utilisé en une proportion suffisante pour constituer au moins 10 % en poids du composant monosaccharide/oligo-saccharide dans la phase aqueuse du liquide.

**2.** Liquide de forage aqueux selon la revendication 1, dans lequel l'additif hydrate de carbone hydrosoluble est choisi parmi :
   (a) un extrait hydrosoluble de canne à sucre ;
   (b) un extrait hydrosoluble de betterave sucrière ;
   (c) un extrait hydrosoluble de grains de malt ;
   (d) un mélange de deux ou plus des constituants ci-dessus.

**3.** Liquide de forage aqueux selon la revendication 2, dans lequel l'extrait hydrosoluble est un extrait de mélasses de canne à sucre ou de betterave sucrière ou un extrait de malt.

**4.** Liquide de forage aqueux selon la revendication 2, dans lequel l'extrait hydrosoluble est choisi parmi les mélasses de canne à sucre, les mélasses de betterave sucrière, les produits solubles de mélasses condensées ou un mélange de deux ou plus des constituants ci-dessus.

**5.** Liquide de forage aqueux selon l'une quelconque des revendications précédentes, dans lequel l'additif hydrate de carbone est utilisé en une proportion suffisante pour constituer au moins 16 % en poids du composant monosaccharide/oligosaccharide dans la phase aqueuse du liquide.

**6.** Liquide de forage aqueux selon l'une quelconque des revendications précédentes, dans lequel l'additif hydrate de carbone est utilisé en une proportion suffisante pour constituer au moins 22 % en poids du composant monosaccharide/oligosaccharide dans la phase aqueuse du liquide.

**7.** Liquide de forage aqueux selon l'une quelconque des revendications précédentes, contenant en outre un réducteur de filtration.

**8.** Liquide de forage selon la revendication 7, dans lequel le réducteur de filtration est utilisé en une proportion suffisante pour réduire substantiellement la quantité de phase aqueuse du fluide de forage perdue pendant l'utilisation.

9. Liquide de forage selon la revendication 7 ou 8, dans lequel le réducteur de filtration est utilisé en une proportion d'au moins 0,2 % en poids/volume.

10. Procédé de forage d'un puits, dans lequel on utilise un liquide de forage selon l'une quelconque des revendications précédentes.

11. Utilisation d'un extrait hydrosoluble d'une substance naturelle contenant une proportion élevée de monosaccharides et/ou oligosaccharides, comme additif pour un liquide de forage aqueux, pratiquement dépourvu de tout composant huileux, pour améliorer la capacité du liquide à inhiber l'argile.